# EUROPÄISCHE PATENTSCHRIFT

(11) **EP 2 125 175 B1**
(45) Veröffentlichungstag und Bekanntmachung des Hinweises auf die Patenterteilung: **11.05.2011**
(21) Anmeldenummer: 08735453.6
(22) Anmeldetag: 20.03.2008
(51) Int. Cl.: B01F 3/08, B01F 3/12, B01F 5/00, B02C 19/06, C09D 5/00

(54) **VERFAHREN ZUM HOCHDRUCKDISPERGIEREN VON REAKTIVEN MONOMEREN**
METHOD FOR THE HIGH-PRESSURE DISPERSION OF REACTIVE MONOMERS
PROCÉDÉ DE DISPERSION À HAUTE PRESSION DE MONOMÈRES RÉACTIFS

(30) Priorität: 26.03.2007 DE 102007014916
(43) Veröffentlichungstag der Anmeldung: 02.12.2009
(73) Patentinhaber: Evonik Degussa GmbH, 45128 Essen (DE)
(72) Erfinder: HÜTHER, Andreas, 63755 Alzenau (DE); ROOS, Sebastian, 65779 Kelkheim (DE); RUSCITTI, Oliver, 50968 Köln (DE); SCHUCHMANN, Heike, 76297 Stutensee (DE); KÖHLER, Karsten, 76131 Karlsruhe (DE); SAUTER, Caroline, 69469 Weinheim (DE); AGUILAR, Freddy, 64287 Darmstadt (DE)
(86) Internationale Anmeldenummer: PCT/EP2008/053421
(87) Internationale Veröffentlichungsnummer: WO 2008/116839

(56) Entgegenhaltungen:
- EP-A- 1 018 749
- WO-A-2004/076515

## Beschreibung

Gegenstand der Erfindung ist ein Verfahren zum Dispergieren von reaktiven Monomeren.

Das Mahlen verschiedener Materialien bedarf zumeist spezieller Vorrichtungen. Beispielsweise ist die Erzeugung keramischer Nanopartikeln in Rührwerkskugelmühlen durch einen hohen Verschleiß an Mahlkörpern und die damit verbundene Produktkontamination, hohe Energieeinträge und lange Zerkleinerungszeiten gekennzeichnet. Neue Mühlenmodelle, die sich Hochleistungsmühlen nennen, sollen die Zerkleinerung von Partikeln bis in den unteren Nanobereich effizienter gestalten. Dies wird durch höhere Leistungsdichten im Mahlraum und die Möglichkeit sehr kleine Mahlkörper einzusetzen, erzielt (S. Breitung, Produktgestaltung in der Partikeltechnologie, Band 3, Frauenhofer IRB Verlag). Neben der ineffizienten Wirtschaftlichkeit dieser Mahlprozesse und der Produktkontamination treten auch Probleme bei der Stabilisierung der Partikeln auf. Dies kann beispielsweise durch die Zugabe von Salpetersäure oder Ameisensäure gelöst werden.

Eine Vielzahl von Zwischen- und Endprodukten, die von unterschiedlichen industriellen Bereichen angeboten werden, sind partikuläre Materialien, die disperse Partikeln im Größenbereich von wenigen Nanometern beinhalten. Die Anwendung von Nanopartikeln bietet z. B. bei Oberflächenbeschichtungen im Einsatz von hochwertigen Polituren oder in der Farbintensität von Farben und Lacken entscheidende Vorteile. Die besonderen Eigenschaften dieser Partikeln kommen jedoch oftmals nur zum Tragen, wenn sie hinreichend fein und homogen verteilt in einer Lösung vorliegen.

Zur Herstellung von Dispersionen (Emulsionen bzw. Partikelsuspensionen) werden industriell häufig Rotor-Stator-Systeme bzw. Rührwerkskugelmühlen eingesetzt. Die Leistungsverteilung und damit die Beanspruchung der Tropfen bzw. Partikeln ist hier meist sehr inhomogen. Der Dispergier- und Desagglomerationsprozess wird überwiegend durch die eingebrachte spezifische Energie beeinflusst (Karbstein, Dissertation Karlsruhe, 1994, Kwade, Dissertation Braunschweig, 1997), wobei die Energieausnutzung als recht ineffizient einzuschätzen ist. Hochdruckdispergierverfahren ermöglichen den Eintrag sehr hoher lokaler Leistungsdichten in die Dispersion und somit eine effizientere Zerkleinerung der Agglomeratverbände. Anorganische Partikelsysteme sind jedoch sehr abrasiv, was zu einem sehr hohen Verschleiß der eingesetzten Saphir- oder Diamantdüsen führt. Dieses Problem führt zu sehr hohen Kosten und verkürzt die Standzeit solcher Anlagen erheblich. Das Hochdruckdispergierverfahren ist aufgrund der höheren Energieeffizienz (Faktor 100 - 300 im Vergleich zu Rotor-Stator-Systemen) für die Industrie sehr interessant, ist aber zurzeit aufgrund der kurzen Standzeiten der Düsen v. a. für Partikelsysteme nicht wirtschaftlich.

EP 782 881 beschreibt ein Verfahren zur Herstellung von Dispersionen eines Feststoffs in einer O/W- oder W/O-Emulsion unter Verwendung eines Hochdruckdispergators, bei dem alle Komponenten durch die Düse des Hochdruckdispergators geleitet werden.

WO 01/05517 beschreibt ein Verfahren zur Herstellung von wässrigen Dispersionen von ZweikomponentenPolyurethanlacken durch Dispergieren der Monomere unter Verwendung eines Hochdruckdispergators, wobei zusätzlich abrasive Füllstoffe in der Dispersion enthalten sein können. Bei dem Verfahren werden alle Komponenten der Dispersion durch die Düsen des Hochdruckdispergators geleitet. Die Vorrichtung muss aus besonders harten keramischen Materialien, wie Zirkonoxid oder Siliziumcarbid, gefertigt sein.

Aufgabe war es ein Verfahren zur Herstellung von Dispersionen zu entwerfen und dabei das Verfahren so zu gestallten, dass der Verschleiß reduziert wird und das Hochdruckdispergieren wirtschaftlich wird.

Die Aufgabe wurde gelöst durch ein Verfahren zum Hochdruckdispergieren, dadurch gekennzeichnet, dass eine erste Dispersion, die eine Monomeremulsion ist, durch eine Dispergierdüse mit einem ersten Druck und eine zweite Dispersion seitlich hinter der Dispergierdüse mit einem zweiten Druck zugeführt wird, der kleiner als der erste Druck ist, und beide Dispersionen in einem Mischraum dispergiert werden.

Vorzugsweise ist die zweite Dispersion eine Suspension, d.h. sie enthält einen Feststoff in Form von dispergierten Partikeln. Insbesondere können Monomer- und Polymerdispersionen mit abrasiven Materialien dispergiert werden.

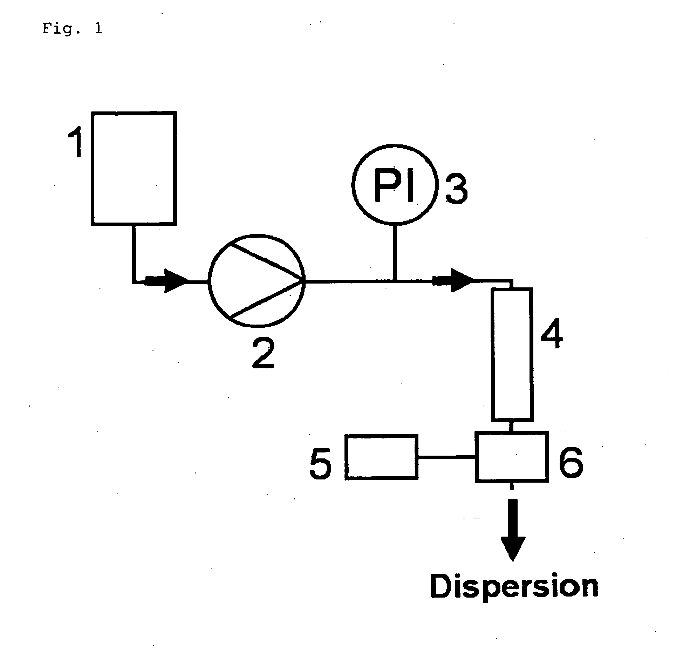

In Figur 1 wird beispielhaft ein Verfahrensaufbau dargestellt. Aus einem Vorratsbehälter 1 wird mittels einer Pumpe 2, vorzugsweise einer Hochdruckpumpe, die erste Dispersion, d.h. die Monomeremulsion, über einen Pulsationsdämpfer 4 der Dispergierdüse 6 zugeführt. Die feststoffhaltige zweite Dispersion wird aus einem separaten Vorratsbehälter 5 der Dispergierdüse 6 zugeführt.

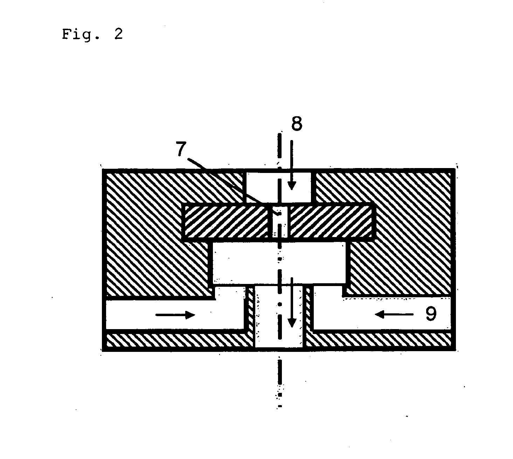

Figur 2 zeigt beispielhaft eine Ausführungsform einer geeigneten Dispergierdüse, bei der eine erste Dispersion 8 durch eine Lochdüse 7 geleitet wird und seitlich hinter der Dispergierdüse durch zwei oder mehr Kanäle eine zweite Dispersion 9 zugeführt wird.

In dem erfindungsgemäßen Verfahren passieren die Feststoffpartikel nicht mehr die Bohrung der Düse, sondern werden kurz danach zugeführt. Damit kann der Verschleiß der Düse erheblich reduziert werden.

Überraschend wurde gefunden, dass in einem Dispergierschritt Dispersionen mit sowohl einer flüssigen als auch einer festen Phasen gleichzeitig dispergiert werden können. Im Besonderen können in einem Dispergierschritt fest/flüssig/flüssig Dispersionen hergestellt werden.

Die Dispergierdüse wird mit einem hohen Druck beaufschlagt. Die erste Dispersion wird mit einem ersten Druck und die zweite Dispersion seitlich hinter der Dispergierdüse mit einem zweiten Druck zugeführt, der kleiner als der erste Druck ist. Die erste Dispersion wird über die Dispergierdüse vorzugsweise mit einem Druck von 10 bis 4000 bar, besonders bevorzugt von 100 bis 2000 bar zugegeben. Es konnte gezeigt werden, dass beim Hochdruckdispergieren direkt nach der Düse ein starker Unterdruck entsteht. Dieses Phänomen kann für die Einströmung der zweiten Dispersion ausgenutzt werden. Dies ist für die Zuführung von Partikeln, insbesondere abrasiven Partikeln, interessant.

Die axial ausströmende erste Dispersion (Monomeremulsion) reißt die zweite Dispersion mit und vermischt sich mit dieser. Hinter dem Düsenaustritt steigt die turbulente kinetische Energie stark an. Die Trägheitskräfte in den turbulenten Strömungen führen zu einer Dispergierung und Desagglomerierung von Partikelagglomeraten in der Flüssigkeit bei gleichzeitigem Aufbruch von Emulsionstropfen. Zudem bewirkt die bei fast allen Dispergierdüsen auftretende Kavitation eine weitere Zerkleinerung von Tropfen und Agglomeraten. Die starke Querschnittsverengung führt zu einem Anstieg der Strömungsgeschwindigkeit, so dass der Druck in und hinter der Düse so stark abfällt, dass sich Kavitationsblasen bilden können, die zur Zerkleinerung beitragen. Durch diese Prozessführung wird der Verschleiß der Düse erheblich reduziert, da lediglich flüssige Phasen durch die Düse hindurch strömen.

Dennoch werden mit diesem Verfahren und der verwendeten Vorrichtung im Vergleich mit den bekannten Hochdruckverfahren vergleichbar gute und energieeffiziente Zerkleinerungsergebnisse erzielt, da der dispergierwirksame Bereich hoher lokaler kinetischer Energiefreisetzung durch Turbulenz und Kavitation hinter der Düse ist, wo Tropfen und Partikeln vorliegen.

In Dispergierversuchen wurden einfache Lochdüsen mit einem Durchmesser von 0,05 bis 1 mm und einer Dicke von 1 bis 3 mm eingesetzt.

Die zweite Dispersion (Suspension) wird mit der durch die Düse geförderten ersten Dispersion (Monomeremulsion) vermischt und dabei mit der ersten Dispersion verdünnt. In der zweiten Dispersion enthaltene Partikelagglomerate werden dabei zerkleinert. Bei einem ersten Druck auf der Dispergierdüse von 10 bis 1000 bar kann die Verdünnung üblicherweise zwischen 3:1 bis 1:3 variiert werden, im Besonderen von 1:1 bis 1:3. Um die Partikelkonzentration im Endprodukt zu erhöhen, kann die zweite Dispersion auch von mehreren Seiten gleichzeitig zugeführt werden.

Die Partikelkonzentration in der zweiten Dispersion kann soweit erhöht werden, bis die Grenze der Fließfähigkeit der Suspension erreicht wird.

Die Zuführung der zweiten Dispersion hinter der Dispergierdüse kann auf die verschiedensten Weisen erfolgen. Der Winkel der Zuführung zum Düsenaustritt der ersten Dispersion kann beliebig gewählt werden. Ebenso kann der Querschnitt der Zuführung frei gewählt werden. Sowohl die Form als auch die Größe der Zuführung sind variabel. Dies gilt, solange gewährleistet bleibt, dass der Eintritt der partikelhaltigen Suspension im Gebiet des Unterdruckes direkt hinter der Düse liegt.

Der zweite Druck, unter dem die zweite Dispersion zugeführt wird, muss deutlich unter dem ersten Druck der ersten Dispersion liegen. Vorzugsweise wird die erste Dispersion über die Dispergierdüse mit einem ersten Druck von 10 bis 4000 bar, besonders bevorzugt mit 100 bis 2000 bar, zugegeben. Die zweite Dispersion kann beispielsweise drucklos zugeführt werden, indem das Medium über den entstehenden Unterdruck hinter der Dispergierdüse angesaugt wird. Vorzugsweise wird die zweite Dispersion mit einem Überdruck von 0,05 bis 100 bar, besonders bevorzugt mit einem Überdruck von 0,5 bis 10 bar, zugeführt.

Ein weiterer Vorteil dieser Vorrichtung ist die Möglichkeit, verschiedene Komponenten der Dispersion gleichzeitig zu verarbeiten. So können verschiedene Medien nach der Düse zugeführt werden. Diese treffen sich in der Mischkammer, werden zerkleinert und vermischen sich gleichzeitig. Diese Option kann zur zusätzlichen Einsparung von Arbeitsschritten und infolge dessen zur Reduzierung der Kosten führen. Beispielsweise kann die zweite Dispersion in Wasser und gegebenenfalls mit Hilfsmitteln dispergiert zugeführt werden. Ebenso kann die zweite Dispersion in Lösungsmitteln und gegebenenfalls mit Hilfsmitteln dispergiert zugeführt werden.

Das erfindungsgemäße Verfahren zum Dispergieren zeichnet sich dadurch aus, dass als erste Dispersion eine Monomeremulsion zugeführt wird, die reaktive Monomere enthält. Geeignete Monomer sind Meth(acrylate), Styrole, Vinylacetat, Alkohole, Säuren, Amine und Isocyanate. Die Schreibweise (Meth)acrylat bedeutet hier sowohl Methacrylat, wie z. B. Methylmethacrylat, Ethylmethacrylat usw., als auch Acrylat, wie z.B. Methylacrylat, Ethylacrylat usw., sowie Mischungen aus beiden. Vorzugsweise wird eine Monomeremulsion zugeführt, die ein Meth(acrylat) enthält, besonders bevorzugt Methylmethacrylat. Das Verfahren hat den Vorteil, dass sich in der Emulsion keine abrasiven Teilchen befinden, die die Dispergierdüse im Gebrauch in der Art beanspruchen würden, dass sich die Standzeit verkürzt.

Neben der ersten Dispersion (Monomeremulsion) kann gegebenenfalls auch die zweite Dispersion reaktive Komponenten, beispielsweise reaktive Monomere oder reaktive Initiatoren enthalten.

In der Emulsion können weitere Bestandteile, wie der Emulgator, hydrophobe wasserunlösliche Reagenzien (z.B. Hexadekan), Überträger (z.B. Thiole), Costabilisatoren und Initiatoren (z.B. Peroxide, Azoinitiatoren) und weitere Additive zugegeben werden. Unter hydrophoben Reagenzien werden typischerweise schwer wasserlösliche Agenzien verstanden, wie sie bei der Herstellung von Miniemulsionen zum Einsatz kommen (s. Macromol. Rapid Commun. 22, 896 (2001)). Unter Initiatoren werden typischerweise Initiatoren verstanden, die zur Ketten- oder Stufenpolymerisation geeignet sind. Dies kann sich auch auf Initiatorsysteme beziehen, die aus einem oder mehreren Agenzien bestehen (z.B. FeSO₄ / Natriumdisulfit / Natriumperoxosulfat). Bei der Zugabe von Initiatoren ist darauf zu achten, dass die durch das Hochdruckdispergieren eingetragene Energie die dispergierten Initiatoren nicht so stark erwärmt, dass ein thermischer Zerfall des Initiators einsetzt. Der verwendete Initiator kann sowohl in der ersten Dispersion als auch in der zweiten Dispersion zugegeben werden. Der Vorteil der direkten Zugabe des Initiators liegt darin, dass weitere Arbeitsschritte nach dem Dispergieren wegfallen.

Das erfindungsgemäße Verfahren eignet sich zum Dispergieren von abrasiven Materialien, insbesondere von Siliziumdioxiden, Metallen, Metalloxiden, anorganischen und organischen Pigmenten, Rußen, anorganischen und organischen Pigmentdispersionen und deren Mischungen. Besonders bevorzugt werden TiO₂, ZnO, ZnS, CeO₂, ZrO₂, Al₂0O₃, Fe₂O₃, Fe₃O₄, FeO, FeOOH und Mg-, Cu-, Mn- und Zn-Ferrite und deren Mischungen. Zusammen mit den abrasiven Materialien werden auch Monomere dispergiert, sodass strukturierte Dispersionen erhalten werden.

Die genannten anorganischen Partikel können unterschiedliche Oberflächenstrukturen oder Modifikationen der Oberfläche aufweisen. Die Partikel können insbesondere mit organischen Molekülen belegte Oberflächen aufweisen (z.B. adsorbierte Fettsäuren oder gebundene Octylsilylgruppen oder Methacrylatgruppen). Ebenso bevorzugt kann das erfindungsgemäße Verfahren verwendet werden, um Cadmium-, Bismut-, Chrom- und Eisenhaltige Pigmente, Azo- und Chinophthalonpigmente, sowie polycyclische aluminiumverlackte Pigmente und deren Mischungen gleichzeitig zum Dispergieren und mit Monomeren zu Beschichten.

Vorzugsweise enthält die zweite Dispersion den Feststoff in Form von Nanopartikeln. Der Begriff Nanopartikel steht dabei für Partikel, deren Median der Primärpartikelgrößenverteilung weniger als 50 nm beträgt. Die Nanopartikel können in der zweiten Dispersion auch in agglomerierter oder aggregierter Form vorliegen.

Die mit dem erfindungsgemäßen Verfahren hergestellten Dispersionen können sofort eingesetzt werden oder als Vorstufen weiterverwendet werden, beispielsweise für Polymerisationen. Ebenso können die erhaltenen Dispersionen Miniemulsionen darstellen, die wiederum zur Polymerisation in situ weiterverwendet werden können. Die nach der Polymerisation erhaltenen Materialien bestehen aus Polymerpartikel mit anorganischen Anteilen. Die Morphologie der verschiedenen Stoffe kann derart aufgebaut sein, dass die anorganischen Partikel von einer kugelförmigen Polymerphase umhüllt sind. Hierbei ist diese Umhüllung nicht zu Verwechseln mit dem Einbringen anorganischer Materialien in eine Polymermatrix. Auf diese Weise hergestellte Materialien werden als Hybridmaterialien bezeichnet, da sie zwei völlig verschiedene Werkstoffe miteinander verbinden.

## Patentansprüche

1. Verfahren zum Dispergieren von reaktiven Monomeren,
**dadurch gekennzeichnet,**
**dass** eine erste Monomeremulsion mit einem ersten Druck durch eine Dispergierdüse und eine zweite Dispersion seitlich hinter der Dispergierdüse mit einem zweiten Druck kleiner als dem ersten Druck zugeführt und beide in einem Mischraum miteinander dispergiert werden.

2. Verfahren nach Anspruch 1,
**dadurch gekennzeichnet, dass** die seitlich hinter der Dispergierdüse zugeführte zweite Dispersion durch einen Unterdruck hinter der Dispergierdüse in den Mischraum gezogen wird.

3. Verfahren nach Anspruch 1,
**dadurch gekennzeichnet,**
**dass** die seitlich hinter der Dispergierdüse zugeführte zweite Dispersion unter erhöhtem Druck dem Mischraum zugeführt wird.

4. Verfahren nach Anspruch 3,
**dadurch gekennzeichnet,**
**dass** die seitlich hinter der Dispergierdüse zugeführte zweite Dispersion unter einem Überdruck bis 100 bar, bevorzugt bis 10 bar dem Mischraum zugeführt wird.

5. Verfahren nach einem der vorangehenden Ansprüche,
**dadurch gekennzeichnet,**
**dass** die zweite Dispersion reaktive Komponenten, bevorzugt reaktive Monomere enthält.

6. Verfahren nach einem der vorangehenden Ansprüche,
**dadurch gekennzeichnet,**
**dass** die zweite Dispersion eine Suspension ist.

7. Verfahren nach Anspruch 6,
**dadurch gekennzeichnet,**
**dass** die zweite Dispersion Nanopartikel enthält.

8. Verfahren nach Anspruch 6 oder 7,
**dadurch gekennzeichnet,**
**dass** die zweite Dispersion ein Siliziumdioxid, Metalloxid, Metall, Pigment oder Ruß oder eine Mischung davon enthält.

9. Verfahren nach Anspruch 8,
**dadurch gekennzeichnet,**
**dass** die zweite Dispersion ein oberflächenmodifiziertes Siliziumdioxid oder Metalloxid oder eine Mischung davon enthält.

10. Verfahren nach Anspruch 8,
**dadurch gekennzeichnet,**
**dass** die zweite Dispersion ein oder mehrere Metalloxide aus der Reihe TiO₂, ZnO, ZnS, CeO₂ ZrO₂, Al₂O₃, Fe₂O₃, Fe₃O₄, FeO, FeOOH , Mg-Ferrit, Cu-Ferrit, Mn-Ferrit und Zn-Ferrit enthält.

11. Verfahren nach einem der Ansprüche 6 bis 9,
**dadurch gekennzeichnet,**
**dass** die zweite Dispersion als flüssige Phase Wasser enthält.

12. Verfahren nach einem der Ansprüche 6 bis 9,
**dadurch gekennzeichnet,**
**dass** die zweite Dispersion als flüssige Phase ein oder mehrere Lösungsmittel enthält.

13. Verfahren nach einem der vorangehenden Ansprüche,
**dadurch gekennzeichnet,**
**dass** die Monomeremulsion der Dispergierdüse mit einem Druck von 10 bis 4000 bar zugeführt wird.

14. Verfahren nach einem der vorangehenden Ansprüche,
**dadurch gekennzeichnet,**
**dass** die Monomeremulsion oder die zweite Dispersion einen Initiator zur Ketten- oder Stufenpolymerisation enthält.

15. Verfahren nach einem der vorangehenden Ansprüche,
**dadurch gekennzeichnet,**
**dass** die Monomeremulsion ein Methacrylat oder ein Acrylat enthält.

## Claims

1. Method for the dispersion of reactive monomers,
**characterized in that**
a first monomer emulsion is passed with a first pressure through a dispersion die and a second dispersion is fed laterally behind the dispersion die at a second pressure that is less than the first pressure and the two are dispersed with one another in a mixing chamber.

2. Method according to Claim 1,
**characterized in that** the second dispersion fed laterally behind the dispersion die is drawn into the mixing chamber by a subatmospheric pressure behind the dispersion die.

3. Method according to Claim 1,
**characterized in that**
the second dispersion fed laterally behind the dispersion die is fed to the mixing chamber under increased pressure.

4. Method according to Claim 3,
**characterized in that**
the second dispersion fed laterally behind the dispersion die is fed to the mixing chamber under a superatmospheric pressure up to 100 bar, preferably up to 10 bar.

5. Method according to any one of the preceding claims,
**characterized in that**
the second dispersion comprises reactive components, preferably reactive monomers.

6. Method according to any one of the preceding claims,
**characterized in that**
the second dispersion is a suspension.

7. Method according to Claim 6,
**characterized in that**
the second dispersion comprises nanoparticles.

8. Method according to Claim 6 or 7,
**characterized in that**
the second dispersion comprises a silicon dioxide, metal oxide, metal, pigment or carbon black or a mixture thereof.

9. Method according to Claim 8,
**characterized in that**
the second dispersion comprises a surface-modified silicon dioxide or metal oxide or a mixture thereof.

10. Method according to Claim 8,
**characterized in that**
the second dispersion comprises one or more metal oxides from the series TiO₂, ZnO, ZnS, CeO₂, ZrO₂, Al₂O₃, Fe₂O₃, Fe₃O₄, FeO, FeOOH, Mg ferrite, Cu ferrite, Mn ferrite and Zn ferrite.

11. Method according to any one of Claims 6 to 9,
**characterized in that**
the second dispersion comprises water as liquid phase.

12. Method according to any one of Claims 6 to 9,
**characterized in that**
the second dispersion comprises one or more solvents as liquid phase.

13. Method according to any one of the preceding claims,
**characterized in that**
the monomer emulsion is passed to the dispersion die with a pressure of from 10 to 4000 bar.

14. Method according to any one of the preceding claims,
**characterized in that**
the monomer emulsion or the second dispersion comprises an initiator for the chain polymerization or step polymerization.

15. Method according to any one of the preceding claims,
**characterized in that**
the monomer emulsion comprises a methacrylate or an acrylate.

## Revendications

1. Procédé de dispersion de monomères réactifs, **caractérisé en ce qu'**une première émulsion de monomères est introduite à une première pression par une buse de dispersion et une seconde dispersion est introduite latéralement après la buse de dispersion à une seconde pression inférieure à la première pression et les deux sont dispersées l'une avec l'autre dans une chambre de mélange.

2. Procédé selon la revendication 1, **caractérisé en ce que** la seconde dispersion introduite latéralement après la buse de dispersion est attirée par une sous-pression après la buse de dispersion dans la chambre de mélange.

3. Procédé selon la revendication 1, **caractérisé en ce que** la seconde dispersion introduite latéralement après la buse de dispersion est introduite dans la chambre de mélange sous une pression élevée.

4. Procédé selon la revendication 3, **caractérisé en ce que** la seconde dispersion introduite latéralement après la buse de dispersion est introduite dans la chambre de mélange sous une surpression allant jusqu'à 100 bar, de préférence jusqu'à 10 bar.

5. Procédé selon l'une quelconque des revendications précédentes, **caractérisé en ce que** la seconde dispersion contient des composants réactifs, de préférence des monomères réactifs.

6. Procédé selon l'une quelconque des revendications précédentes, **caractérisé en ce que** la seconde dispersion est une suspension.

7. Procédé selon la revendication 6, **caractérisé en ce que** la seconde dispersion contient des nanoparticules.

8. Procédé selon la revendication 6 ou 7, **caractérisé en ce que** la seconde dispersion contient un dioxyde de silicium, un oxyde métallique, un métal, un pigment ou une suie ou un de leurs mélanges.

9. Procédé selon la revendication 8, **caractérisé en ce que** la seconde dispersion contient un oxyde métallique ou dioxyde de silicium modifié en surface ou un de leurs mélanges.

10. Procédé selon la revendication 8, **caractérisé en ce que** la seconde dispersion contient un ou plusieurs oxydes métalliques de la série TiO₂, ZnO, ZnS, CeO₂, ZrO₂, Al₂O₃, Fe₂O₃, Fe₃O₄, FeO, FeOOH, ferrite de Mg, ferrite de Cu, ferrite de Mn et ferrite de Zn.

11. Procédé selon l'une quelconque des revendications 6 à 9, **caractérisé en ce que** la seconde dispersion contient de l'eau en tant que phase liquide.

12. Procédé selon l'une quelconque des revendications 6 à 9, **caractérisé en ce que** la seconde dispersion contient un ou plusieurs solvants en tant que phase liquide.

13. Procédé selon l'une quelconque des revendications précédentes, **caractérisé en ce que** l'émulsion de monomères est introduite dans la buse de dispersion à une pression de 10 à 4 000 bar.

14. Procédé selon l'une quelconque des revendications précédentes, **caractérisé en ce que** l'émulsion de monomères ou la seconde dispersion contient un initiateur pour la polymérisation en chaîne ou par étapes.

15. Procédé selon l'une quelconque des revendications précédentes, **caractérisé en ce que** l'émulsion de monomères contient un méthacrylate ou un acrylate.
